# EUROPEAN PATENT APPLICATION

(11) **EP 4 346 072 A1**
(43) Date of publication of application: **03.04.2024**
(21) Application number: 22923058.6
(22) Date of filing: 15.03.2022
(51) Int. Cl.: H02K 15/02, H02K 15/03, H02K 1/22, H02K 1/2706, H02K 1/02, H02K 1/2786

(54) **ROTOR, MOTOR, AND MANUFACTURING METHOD FOR ROTOR**

(30) Priority: 28.01.2022 CN 202210104689
(71) Applicant: Zibo Langda Composite Material Co., Ltd., Zibo, Shandong 255000 (CN)
(72) Inventor: LIU, Peng, Zibo, Shandong 255000 (CN)
(74) Representative: Baldus, Oliver
(86) International application number: PCT/CN2022/080974
(87) International publication number: WO 2023/142239

(57) **Abstract**

The present application provides a rotor, a motor and a manufacturing method for a rotor, and relates to the technical field of motors. The manufacturing method comprises: assembling a plurality of plate materials, and permanent magnet elements/rotor coils together to form a rotor preform, each plate material being formed by plate-shaped fiber fabric pre-impregnated with resin, and the shape of the plurality of plate materials satisfying that: the plurality of plate materials, after being aligned and stacked together, can be matched to form a rotor body having a mounting chamber, the mounting chamber being suitable for mounting the permanent magnet elements/rotor coils; and forming a rotor after a sizing step and a curing step. A technical problem of the mass density of a rotor formed by stacking silicon steel plates is solved, and technical effects are achieved that the rotor has a low mass density, and exhibits high tensile strength when rotating at a high speed.

## Description

### Cross-reference to Related Application

The present disclosure claims the priority to the Chinese patent application with the filing No. 2022101046897 filed with the Chinese Patent Office on January 28, 2022, and entitled "Rotor, Motor, and Manufacturing Method for Rotor", the contents of which are incorporated herein by reference in entirety.

### Technical Field

The present disclosure relates to the technical field of motors, in particular to a rotor, a motor and a manufacturing method for a rotor.

### Background Art

The rotor of the existing motor is supported on a shaft mounted with bearings, and rotates by inducing the magnetic force of stator coils of the motor. The existing rotor includes a rotor body formed by stacking a plurality of silicon steel plates, and wire coils wound on the rotor body or permanent magnet steels attached to the rotor body. Since the shaft and the rotor body are made of metal materials, and the density of the used metal materials exceeds 7 g/cm³, so the mass density of the whole rotor is relatively high, which will cause the following problems in actual use: firstly, it will cause that when the motor starts instantaneously or brakes instantaneously, it cannot be effectively controlled due to the influence of the rotor's own large inertia; secondly, it will lead to serious wear on the supporting parts such as bearings due to high inertial pressure, especially when the rotor runs at a high speed, which puts forward higher requirements for the wear resistance of bearings; thirdly, when the rotor rotates at a high speed, the centrifugal force caused by density exceeds the tensile strength of metal materials, which leads to the deformation or damage of the rotor; and fourthly, the high mass density of the rotor leads to the slow response of the rotor, which makes it difficult to accurately control the rotor speed.

### Summary

The objective of the present disclosure is to provide a rotor, a motor and a manufacturing method for a rotor, so as to solve the technical problems that the rotor body of the motor rotor in the prior art is made of stacked silicon steel plates, which makes the mass density of the whole rotor high, the instantaneous start and stop difficult to control, the inertial pressure of the shaft supporting parts high, and the rotor prone to wear, and when the rotor rotates at a high speed, the rotor is prone to being deformed or damaged, and the accuracy control of the rotor speed cannot be implemented.

The present disclosure provides a method for manufacturing a rotor, including:
assembling a plurality of plate materials, and permanent magnet elements/rotor coils together to form a rotor preform, wherein each plate material is formed by plate-shaped fiber fabric pre-impregnated with resin, and the shape of the plurality of plate materials satisfies that: the plurality of plate materials, after being aligned and stacked together, can be matched to form a rotor body having a mounting chamber, and the mounting chamber is suitable for mounting the permanent magnet elements/rotor coils; and
forming a rotor after a sizing step and a curing step.

Further, the rotor is an inner rotor, and the step of assembling a plurality of plate materials, and permanent magnet elements/rotor coils together to form a rotor preform includes:
assembling the plurality of plate materials, a rotor shaft, the permanent magnet elements/ rotor coils together to form the rotor preform, wherein
the shapes of the plurality of plate materials for manufacturing the inner rotor satisfy that: the plurality of plate materials, after being aligned and stacked together, can be matched to form the rotor body having a rotating shaft chamber and the mounting chamber, and the rotating shaft chamber is suitable for mounting the rotor shaft.

Further, the shapes of the plurality of plate materials are consistent, and each plate material includes a first center hole and a plurality of first arc-shaped holes arranged around the first center hole; and after the plurality of plate materials are aligned and stacked together, the first center holes form the rotating shaft chamber, and the first arc-shaped holes form the mounting chamber for mounting the permanent magnet elements;
or
the shapes of the plurality of plate materials are inconsistent, and the plate material includes a plurality of first plate materials stacked to constitute two end parts of the rotor body, and a plurality of second plate materials stacked to constitute a middle part of the rotor body, wherein both the first plate materials and the second plate materials have second center holes, and the second plate materials have second arc-shaped holes surrounding the second center holes; and after the plurality of plate materials are aligned and stacked together, the second center holes are aligned to form the rotating shaft chamber, and the second arc-shaped holes are aligned to form the mounting chamber for mounting the rotor coils.

Further, the rotor is an outer rotor, and the shapes of the plurality of plate materials for manufacturing the outer rotor satisfy that: the plurality of plate materials, after being aligned and stacked together, can be matched to form the rotor body having a central chamber and the mounting chamber, wherein the central chamber includes a stator chamber suitable for mounting a stator and bearing chambers located at two ends of the stator chamber and suitable for mounting the bearing.

Further, the shapes of the plurality of plate materials for manufacturing the outer rotor satisfy that: the shapes of the plate materials are inconsistent, and the plate materials include a plurality of third plate materials stacked to constitute two end parts of the rotor body, and a plurality of fourth plate materials stacked to constitute a middle part of the rotor body, wherein the third plate materials have third center holes, and after the plurality of third plate materials are assembled, the third center holes are aligned to form the bearing chambers; and the fourth plate materials have fourth center holes, after the plurality of fourth plate materials are stacked and assembled, the fourth center holes are aligned to form the stator chamber, and a diameter of the third center hole is larger than an outer diameter of the stator.

Further, the third plate materials and the fourth plate materials are both provided with third arc-shaped holes, and after the plurality of plate materials are aligned and stacked together, the third arc-shaped holes are aligned to form the mounting chamber for mounting the permanent magnet elements;
or
the fourth plate materials are provided with fourth arc-shaped holes, and after the plurality of fourth plate materials are aligned and stacked together, the fourth arc-shaped holes are aligned to form the mounting chamber for mounting the rotor coils.

Further, before the sizing step, the method further includes winding the rotor preform with fiber filaments or tapes impregnated with resin in a circumferential direction.

Further, the sizing step includes winding a surface of the rotor preform wrapped with the fiber filaments or tapes impregnated with resin by using a sizing tape for pressurizing and sizing, or putting the rotor preform wrapped with the fiber filaments or tapes impregnated with resin into a mold for pressurizing and sizing.

Further, the curing step includes putting the sized rotor preform into a curing furnace for heating and curing to obtain the rotor.

Further, the thickness of the plate material is 0.05 mm to 0.5 mm;
and/or
the volume ratio of the fiber fabric is 67% to 70%, and the volume ratio of the resin is 30% to 33% in the plate materials;
   and/or
the plate materials is obtained by cutting a continuous fiber fabric pre-impregnated with resin;
   and/or
the fiber fabric is a carbon fiber fabric, and the resin is a thermosetting resin.

A rotor provided by the present disclosure includes:
a rotor body provided with a mounting chamber, wherein the rotor body is integrally formed by stacking and curing a plurality of plate materials along an axial direction of the rotor body, and the plate materials are formed by plate-shaped fiber fabric pre-impregnated with resin; and
permanent magnet elements/rotor coils arranged in the mounting chamber.

Further, the rotor is an inner rotor, and the rotor further includes a rotor shaft, and the rotor body is further provided with a rotating shaft chamber suitable for mounting the rotor shaft.

Further, the shapes of the plurality of plate materials are consistent, and each plate material includes a first center hole and a plurality of first arc-shaped holes arranged around the first center hole; and after the plurality of plate materials are aligned and stacked together, the first center holes form the rotating shaft chamber, and the first arc-shaped holes form the mounting chamber for mounting the permanent magnet elements;
or
the shapes of the plurality of plate materials are inconsistent, and the plate material includes a plurality of first plate materials stacked to constitute two end parts of the rotor body, and a plurality of second plate materials stacked to constitute a middle part of the rotor body, wherein both the first plate materials and the second plate materials have second center holes, and the second plate materials have second arc-shaped holes surrounding the second center holes; and after the plurality of plate materials are aligned and stacked together, the second center holes are aligned to form the rotating shaft chamber, and the second arc-shaped holes are aligned to form the mounting chamber for mounting the rotor coils.

Further, the rotor is an outer rotor, and the plurality of plate materials, after being aligned and stacked together, can be matched to form the rotor body having a central chamber and the mounting chamber, wherein the central chamber includes a stator chamber suitable for mounting a stator and bearing chambers located at two ends of the stator chamber and suitable for mounting the bearing.

Further, the shapes of the plate materials are inconsistent, and the plate materials include a plurality of third plate materials stacked to constitute two end parts of the rotor body, and a plurality of fourth plate materials stacked to constitute a middle part of the rotor body, wherein the third plate materials have third center holes, and after the plurality of third plate materials are assembled, the third center holes are aligned to form the bearing chambers; and the fourth plate materials have fourth center holes, after the plurality of fourth plate materials are stacked and assembled, the fourth center holes are aligned to form the stator chamber, and a diameter of the third center hole is larger than an outer diameter of the stator.

Further, the third plate materials and the fourth plate materials are both provided with third arc-shaped holes, and after the plurality of plate materials are aligned and stacked together, the third arc-shaped holes are aligned to form the mounting chamber for mounting the permanent magnet elements;
or
the fourth plate materials are provided with fourth arc-shaped holes, and after the plurality of fourth plate materials are aligned and stacked together, the fourth arc-shaped holes are aligned to form the mounting chamber for mounting the rotor coils.

Further, it further includes a reinforcing layer, the reinforcing layer is formed by fiber filaments or tapes pre-impregnated with resin wound and bundled along a circumferential direction of the rotor body and integrally cured with the rotor body.

Further, it further includes a sizing tape layer arranged outside the reinforcing layer, wherein the sizing tape layer is configured for curing and sizing of the rotor.

Further, the thickness of the plate material is 0.05 mm to 0.5 mm;
and/or
the volume ratio of the fiber fabric is 67% to 70%, and the volume ratio of the resin is 30% to 33% in the plate materials;
the plate materials is obtained by cutting a continuous fiber fabric pre-impregnated with resin;
   and/or
the fiber fabric is a carbon fiber fabric, and the resin is a thermosetting resin.

Further, a rotating shaft chamber for mounting the rotor shaft is a spline hole, and a spline matched with the spline hole is formed on an outer circumferential surface of the rotor shaft.

The present disclosure further provides a motor having the rotor as described above.

For the rotor provided by the present disclosure, since the rotor body is integrally formed by stacking and curing a plurality of plate materials of fiber fabric pre-impregnated with resin, so the density of the rotor obtained from this is 1.55 g/cm³ to 3 g/cm³, which is much lower than the density of the rotor made of metal, thus reducing the mass density of the whole rotor, which has the following advantages: firstly, the inertial pressure of the shaft supporting parts, such as the bearings which support the rotor shaft, becomes lower, and the friction between the rotor shaft and the bearings also becomes lower accordingly, so that the service life of the bearings can be prolonged; secondly, the inertia of the rotor decreases due to the reduced mass density, the starting time of the rotor from standstill to a rated speed is shortened, and the stopping time from the rated speed to standstill is shortened, so it is easier to control the instantaneous start and stop of the rotor; thirdly, when the rotor rotates at a high speed, the centrifugal force caused by the mass density decreases, and the tensile force of the centrifugal force on the rotor material decreases, making it easier to achieve a high speed; fourthly, due to the decrease of rotor mass density, the response time of rotor speed change becomes shorter, and it is easier to implement accurate control of the rotor speed during high-speed rotation. More importantly, the rotor body integrally formed by curing a plurality of layers of plate materials made of composite materials takes resin as the matrix and multi-layer plate-shaped fiber fabric as the reinforcement, and the fiber fabric are evenly distributed in layers in the axial direction of the rotor body, so that the rotor body is uniformly reinforced everywhere, and has good tensile strength especially in the radial direction, and the rotor body as a whole has high-strength mechanical functions.

The rotor is provided with a reinforcing layer formed by fiber filaments or tapes pre-impregnated with resin wound and bundled along a circumferential direction of the rotor body and integrally cured with the rotor body, so that the rotor has good tensile strength in the circumferential direction to overcome the outward extrusion force caused by the centrifugal force of the permanent magnet elements/rotor coils, and what overcomes the extrusion force is the pulling force on the outer circumferential carbon fiber filaments or tapes pre-impregnated with resin. The characteristics of carbon fiber are high tensile strength and higher stability, and are more in line with the principle, so that the rotor will not be deformed or damaged by the centrifugal force at a high speed.

### Brief Description of Drawings

In order to more clearly illustrate the technical solutions in specific implementations of the present disclosure or in the prior art, a brief description of the accompanying drawings which needs to be used in the description of the specific implementations or the prior art will be introduced briefly below. Apparently, the accompanying drawings described below are merely some implementations of the present disclosure, and for those ordinarily skilled in the art, other drawings can be obtained in light of these drawings without creative effort.
FIG. 1 is a structural schematic diagram of a plate material applied to an inner rotor of Embodiment 1 provided by the present disclosure;
FIG. 2 is a structural schematic diagram of an inner rotor of Embodiment 1 provided by the present disclosure (fiber filaments or tapes impregnated with resin are not shown);
FIG. 3 is a sectional view of FIG. 2;
FIG. 4 is a structural schematic diagram of permanent magnet elements of the present disclosure;
FIG. 5 is a structural schematic diagram of a shaft sleeve of the present disclosure;
FIG. 6 is a structural schematic diagram of a central shaft of the present disclosure; and
FIG. 7 is a structural schematic diagram of a motor assembled by an outer rotor according to Embodiment 3 of the present disclosure.

Reference numerals: 1-plate material; 11-first arc-shaped hole; 12-first center hole; 2-permanent magnet element; 3-shaft sleeve; 4-central shaft; 5-coil; 6-metal core; 7-bearing; 8-stator; 9-fiber filament or tape pre-impregnated with resin.

### Detailed Description of Embodiments

In the following, the technical solutions of the present disclosure will be described clearly and completely in conjunction with embodiments. Obviously, the described embodiments are only some rather than all the embodiments of the present disclosure. Based on the embodiments of the present disclosure, all other embodiment obtained by a person ordinarily skilled in the art without making creative efforts shall fall within the scope of protection of the present disclosure.

A motor includes an electric motor and an electric generator, and the rotor of the present disclosure is suitable as an inner rotor or an outer rotor of the electric motor, and is also suitable as an inner rotor or an outer rotor of the electric generator.

### Embodiment 1

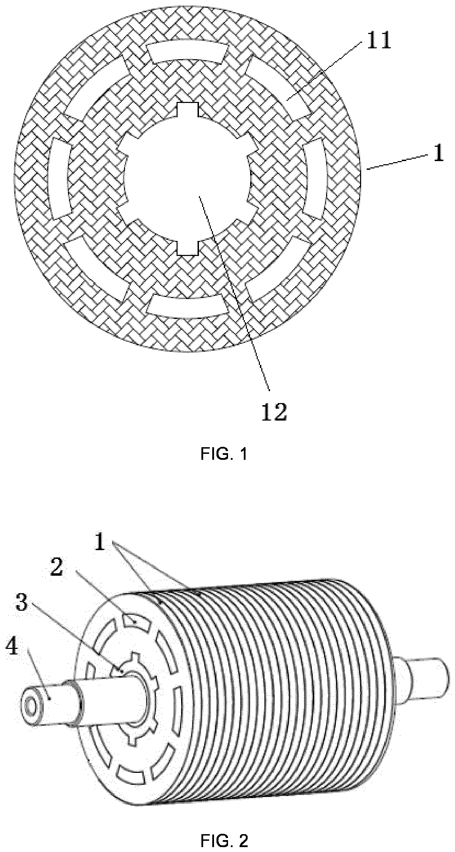

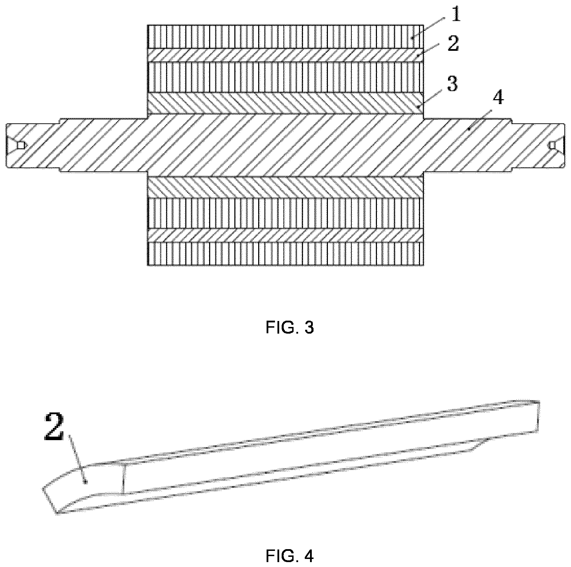

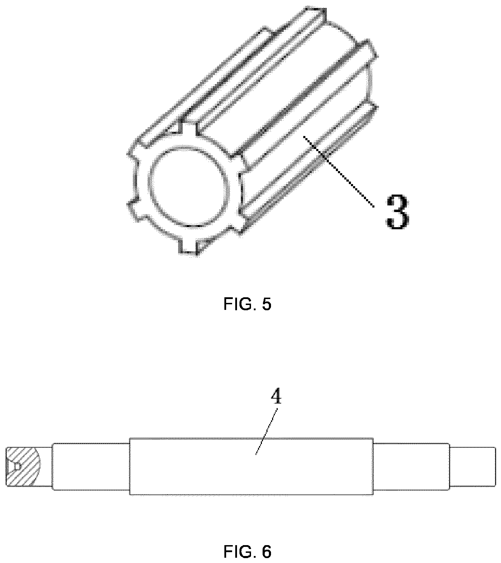

As shown in FIGS. 1 to 6, the rotor provided by Embodiment 1 of the present disclosure is an inner rotor, which can be applied to an electric generator or an electric motor. Specifically, the rotor includes a rotor shaft, a rotor body and permanent magnet elements 2. The rotor body is mounted on the rotor shaft, and the rotor body has a mounting chamber and a rotating shaft chamber, and is integrally formed by stacking and curing a plurality of plate materials 1 along an axial direction of the rotor body, and the plate materials 1 are formed by plate-shaped fiber fabric pre-impregnated with resin, the permanent magnet elements 2 are arranged in the mounting chamber, and the rotor shaft is mounted by passing through the rotating shaft chamber. According to the different shape of the rotor body, the shapes of the stacked plate materials 1 may be consistent and different, as long as the required shape of the rotor body can be formed after stacking. In Embodiment 1 of the present disclosure, it is preferable that all the plate materials 1 have the same shape and are disc-shaped. Each plate material includes a first center hole 12 and a plurality of first arc-shaped holes 11 arranged around the first center hole 12; and after the plurality of plate materials 1 are aligned and stacked together, the first center holes 12 form the rotating shaft chamber, and the first arc-shaped holes 11 form the mounting chamber for mounting the permanent magnet elements 2.

Since the density of fiber and resin is much lower than the density of metal (7 g/cm³), the density (1.55 g/cm³ to 3 g/cm³) of the rotor body integrally formed by stacking and curing the plurality of plate materials of fiber fabric pre-impregnated with resin is also much lower than the density of metal, thus reducing the mass density of the whole rotor obtained in this way, which has the following advantages: firstly, the inertial pressure of the shaft supporting parts, such as the bearings 7 which support the rotor shaft, becomes lower, and the friction between the rotor shaft and the bearings also becomes lower accordingly, so that the service life of the bearings 7 can be prolonged; secondly, the inertia of the rotor decreases due to the reduced mass density, the starting time of the rotor from standstill to a rated speed is shortened, and the stopping time from the rated speed to standstill is shortened, so it is easier to control the instantaneous start and stop of the rotor. thirdly, when the rotor rotates at a high speed, the centrifugal force caused by the mass density decreases, and the tensile force of the centrifugal force on the rotor material decreases, making it easier to achieve a high speed; fourthly, due to the decrease of rotor mass density, the response time of rotor speed change becomes shorter, and it is easier to implement accurate control of the rotor speed during high-speed rotation.

More importantly, the rotor body integrally formed by curing a plurality of layers of plate materials made of composite materials takes resin as the matrix and multi-layer plate-shaped fiber fabric as the reinforcement, and the fiber fabric are evenly distributed in layers in the axial direction of the rotor body, so that the rotor body is uniformly reinforced everywhere, and has good tensile strength especially in the radial direction, and the rotor body as a whole has high-strength mechanical functions. The permanent magnet elements 2 are mounted into the mounting chamber of the rotor body by insertion, which are not only simple and easy to assemble, but more importantly, they will not be thrown out and fall off when rotating at a high speed, thus prolonging the service life of the rotor. Preferably, the permanent magnet elements 2 are arc-shaped permanent magnet steel.

Further, the rotor further includes a reinforcing layer, the reinforcing layer is formed by fiber filaments or tapes 9 pre-impregnated with resin wound and bundled along a circumferential direction of the rotor body and integrally cured with the rotor body. Preferably, the fiber filaments or tapes 9 pre-impregnated with resin are carbon fiber filaments or tapes pre-impregnated with resin. Because the fiber composite material is a fabric material, it has tensile resistance, stability and easy constructability in the fabric mechanics direction. Besides, the outer layer of the rotor body is bound and reinforced by using carbon fiber filaments or tapes pre-impregnated with resin, so that the rotor has good tensile strength in the circumferential direction to overcome the outward extrusion force caused by the centrifugal force of the permanent magnet elements 2, and what overcomes the extrusion force is the pulling force on the outer circumferential carbon fiber filaments or tapes pre-impregnated with resin. The characteristics of carbon fiber are high tensile strength and higher stability, and are more in line with the principle, so that the rotor will not be deformed or damaged by the centrifugal force at a high speed.

Further, the rotor further includes a sizing tape layer arranged outside the reinforcing layer, wherein the sizing tape layer is configured for curing and sizing of the rotor. The sizing tape layer may preferably be a BOPP tape, and the BOPP tape is a biaxially oriented polypropylene film, and is used for winding the rotor body for pressurizing and sizing. Of course, the rotor provided by the embodiment of the present disclosure may also be directly shaped by a mold when the rotor is manufactured without arranging a sizing tape layer.

Preferably, the thickness of the plate material 1 is 0.05 mm to 0.5 mm, volume ratio of the fiber fabric is 67% to 70%, and the volume ratio of the resin is 30% to 33% in the plate materials 1.

The resin may be thermosetting resin. The thermosetting resin is an insoluble substance with rigid three-dimensional network structure formed by molecular polymerization, crosslinking and curing, and the thermosetting resin may be artificial polymeric resin with strong fiber affinity and obvious reinforcement, such as epoxy resin, polyester resin, vinyl ester, bismaleimide, thermosetting polyimide and cyanate ester.

The resin may also be thermoplastic resin. The thermoplastic resin is a genera of synthetic resin that may be softened by repeated heating and cured by cooling, and the thermosetting resin may be artificial synthetic resin with strong fiber affinity and obvious reinforcement, such as PPS polyphenylene sulfide, PEEK polyetheretherketone, PEKK polyetherketoneketone, PE-polyethylene, PP- polypropylene, PVC- polyvinyl chloride, PS- polystyrene, PA-polyamide, POM- polyoxymethylene, PC- polycarbonate, polyphenylene ether, polysulfone and rubber.

The fiber fabric is an artificial long fiber or short fiber with tensile strength greater than 1000 Mpa. These fibers have the characteristics of strong resin affinity and can obviously enhance the tensile strength. Fibers that can be applied to fiber fabric are: carbon fiber, aramid fiber, quartz fiber, basalt fiber, glass fiber, etc., and artificial long fibers or short fibers with strong resin affinity and obvious enhanced tensile strength greater than 1000 Mpa.

In the embodiments of the present disclosure, it is preferred that the fiber fabric is carbon fiber and the resin is thermosetting resin, so that the rotor formed in this way is made of composite materials with mass density less than 1.6 g/cm³ except the rotor shaft and the permanent magnet elements 2. Compared with the traditional rotor, the rotor of the present disclosure has greatly reduced mass density and is more suitable for occasions requiring high speed.

Further, a rotating shaft chamber for mounting the rotor shaft is a spline hole, and a spline matched with the spline hole is formed on an outer circumferential surface of the rotor shaft. Through the matching of spline holes and splines, on the one hand, the rotor shaft and the rotor body can be inserted and connected to drive the rotor body to rotate simultaneously, on the other hand, the splines on the rotor shaft can position the plate materials 1 when the plate materials 1 are stacked and mounted, so as to ensure that the first arc-shaped holes 11 on all plate materials 1 can be aligned after the stacked plate materials 1 are mounted on the rotor shaft.

The rotor shaft may be integrally formed or assembled by the central shaft 4 and the shaft sleeve 3 separately, and the central shaft 4 and the shaft sleeve 3 are connected into a whole by interference fit, preferably the central shaft 4 is a steel shaft and the shaft sleeve 3 is a copper sleeve, and splines are formed on the shaft sleeve 3.

A manufacturing method for manufacturing the inner rotor of Embodiment 1 provided by an embodiment of the present disclosure includes:
assembling the plurality of plate materials 1, the permanent magnet elements 2 and the rotor shaft together to form the rotor preform, wherein the plate materials 1 are formed by plate-shaped fiber fabric pre-impregnated with resin, and the shapes of the plurality of plate materials 1 satisfy that: the plurality of plate materials 1, after being aligned and stacked together, can be matched to form the rotor body having a rotating shaft chamber and the mounting chamber, the rotating shaft chamber is suitable for mounting the rotor shaft, and the mounting chamber is suitable for mounting the permanent magnet elements 2;
forming a rotor after a sizing step and a curing step.

The plate material 1, the permanent magnet elements 2 and the rotor shaft are assembled together to form a rotor preform, and then the rotor is formed after a sizing step and a curing step. In this way, it is not only easy to assemble, but also the plate material 1, the permanent magnet elements 2 and the rotor shaft of the rotor formed after curing are integrated, which can reduce the noise when the rotor is rotating.

As an optional implementation, in the manufacturing method for the inner rotor of Embodiment 1, a rotor preform may be formed by assembling the plurality of plate materials 1 and permanent magnet elements 2 together, and the rotor is formed after the sizing step and the curing step, and finally the rotor shaft is inserted into the rotating shaft chamber of the rotor.

In this embodiment, the shapes of the plurality of plate materials are consistent, and each plate material includes a first center hole 12 and a plurality of first arc-shaped holes 11 arranged around the first center hole 12; and after the plurality of plate materials 1 are aligned and stacked together, the first center holes 12 form the rotating shaft chamber, and the first arc-shaped holes 11 form the mounting chamber for mounting the permanent magnet elements 2;

With regard to the specific assembly of the rotor preform, the rotor shaft and the permanent magnet elements 2 may be fixed in advance by tools, and then the plate materials 1 may be passed through the rotor shaft and the permanent magnet elements 2 one by one to form the rotor preform, or the plurality of plate materials 1 may be stacked into a whole by tools, and then the rotor shaft and the permanent magnet elements 2 may be inserted, or all the plate materials 1 may be passed through the rotor shaft, and then the permanent magnet elements 2 may be inserted. The assembly method is not limited to this.

Preferably, before the sizing step, the method further includes winding the rotor preform with fiber filaments or tapes 9 impregnated with resin in a circumferential direction, so that a reinforcing layer can be formed outside the rotor body and cured together with the rotor body to form a whole.

Specifically, the sizing step includes winding a surface of the rotor preform wrapped with the fiber filaments or tapes 9 impregnated with resin by using a sizing tape for pressurizing and sizing, and the sizing tape may preferably be a BOPP tape, and the BOPP tape is a biaxially oriented polypropylene film.

Optionally, the sizing step may also be performed by directly putting the rotor preform wrapped with fiber filaments or tapes 9 impregnated with resin into a mold for pressurizing and sizing.

The curing step includes putting the sized rotor preform into a curing furnace for heating and curing to obtain the rotor.

Preferably, the thickness of the plate material 1 is 0.05 mm to 0.5 mm, volume ratio of the fiber fabric is 67% to 70%, and the volume ratio of the resin is 30% to 33% in the plate materials 1.

The resin may be thermosetting resin or thermoplastic resin.

The fiber fabric is an artificial long fiber or short fiber with tensile strength greater than 1000 Mpa.

In this embodiment, it is preferred that the fiber fabric is carbon fiber fabric, and the resin is thermosetting resin.

The plate material 1 may be reinforced by injection molding, compression molding, vacuum infusion TRM molding, SMC compression molding, laminated molding by using fiber fabric pre-impregnated with resin, and winding-enhancing molding by wet-method resin impregnation or hot-melt dry-method resin impregnation.

### Embodiment 2

An inner rotor provided by Embodiment 2 of the present disclosure is different from the rotor of Embodiment 1 in that in Embodiment 2 of the present disclosure, rotor coils, instead of permanent magnet elements 2, are arranged on the rotor body, and the shape of the plate materials is also slightly different. In Embodiment 2 of the present disclosure, the plate material 1 includes a plurality of first plate materials stacked to constitute two end parts of the rotor body, and a plurality of second plate materials stacked to constitute a middle part of the rotor body, wherein both the first plate materials and the second plate materials have second center holes, and the second plate materials have second arc-shaped holes surrounding the second center holes; and after the plurality of plate materials 1 are aligned and stacked together, the second center holes are aligned to form the rotating shaft chamber, and the second arc-shaped holes are aligned to form the mounting chamber for mounting the rotor coils. The rotor coils includes a metal core 6 and a coil 5 wound on the metal core 6.

The manufacturing method for manufacturing the inner rotor of Embodiment 2 provided by the embodiment of the present disclosure is basically the same as the manufacturing method for the inner rotor of Embodiment 1, with the following differences.

The specific steps of assembling the plurality of plate materials 1, rotor coils and rotor shafts together to form a rotor preform are different. The rotor shaft may be sequentially passed through the second center hole of the plurality of first plate materials and the second center hole of a plurality of second plate materials, then the rotor coils are inserted into the second arc-shaped holes of a plurality of second plate materials, and then the plurality of first plate materials are mounted on the rotor shaft. Optionally, the rotor shaft may be inserted into the second center hole of a plurality of second plate materials, the rotor coils may be inserted into the second arc-shaped holes of a plurality of second plate materials, and then the plurality of first plate materials are respectively passed through the two ends of the rotor shaft, so that the plurality of first plate materials, a plurality of second plate materials and the plurality of first plate materials are stacked to constitute a rotor body. There are many specific ways of assembly, which is not limited to the above.

During curing of the rotor with rotor coils, in order to protect the insulation layer of the wire on the rotor coils, low temperature curing may be adopted, for example, at a curing temperature of 60°C. A coil with an insulating layer that can withstand high temperature may also be selected.

### Embodiment 3

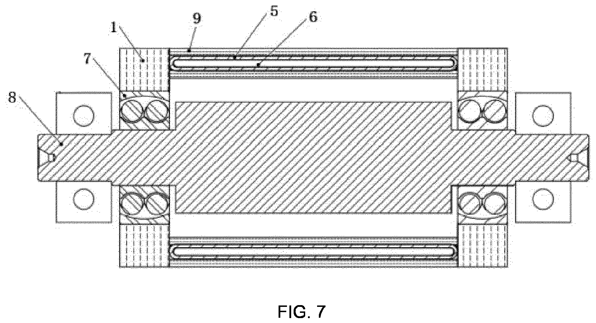

As shown in FIG. 7, an outer rotor provided by Embodiment 3 of the present disclosure is applicable to electric generators and electric motors. Specifically, the outer rotor includes a rotor body and rotor coils. The rotor body is integrally formed by stacking and curing a plurality of plate materials 1 along an axial direction of the rotor body, and the plate materials 1 are formed by plate-shaped fiber fabric pre-impregnated with resin The plurality of plate materials 1, after being aligned and stacked together, can be matched to form the rotor body having a central chamber and the mounting chamber, wherein the central chamber includes a stator chamber suitable for mounting a stator 8 and bearing chambers located at two ends of the stator chamber and suitable for mounting the bearing 7.

The shapes of the plate materials constituting the rotor body are not completely consistent during the specific arrangement. The plate materials 1 include a plurality of third plate materials stacked to constitute two end parts of the rotor body, and a plurality of fourth plate materials stacked to constitute a middle part of the rotor body, wherein the third plate materials have third center holes, and after the plurality of third plate materials are assembled, the third center holes are aligned to form the bearing chambers; and the fourth plate materials have fourth center holes, after the plurality of fourth plate materials are stacked and assembled, the fourth center holes are aligned to form the stator chamber, and a diameter of the third center hole is larger than an outer diameter of the stator, so as to facilitate inserting the stator 8 into the rotor for mounting. The fourth plate materials are provided with fourth arc-shaped holes, and after the plurality of fourth plate materials are aligned and stacked together, the fourth arc-shaped holes are aligned to form the mounting chamber for mounting the rotor coils. The rotor coils includes a metal core 6 and a coil 5 wound on the metal core 6.

Similarly, the outer rotor further includes a reinforcing layer and a sizing tape layer arranged outside the reinforcing layer, and the specific arrangement can be referred to the content of Embodiment 1, which will not be repeated here. The selection of the types of resin and fiber fabric, the thickness of the plate materials, etc. can all be referred to the content of Embodiment 1.

The manufacturing method for manufacturing the outer rotor of Embodiment 3 provided by the embodiment of the present disclosure is different from Embodiment 1 in that the outer rotor of Embodiment 3 only needs to assemble a plurality of plate materials 1 and rotor coils together to form a rotor preform. During the specific assembly, the rotor coils may be passed through the fourth arc-shaped holes of a plurality of fourth plate materials, and then a plurality of third plate materials are stacked on both sides of a plurality of fourth plate materials to form a rotor body. There are many specific ways of assembly, which is not limited to the above.

Similarly, because the rotor coils is mounted on the outer rotor, in order to protect the insulation layer of the wire on the rotor coils during curing, low temperature curing may be adopted, for example, at a curing temperature of 60°C. A coil with an insulating layer that can withstand high temperature may also be selected.

### Embodiment 4

An outer rotor provided in Embodiment 4 of the present disclosure is different from the outer rotor of Embodiment 3 in that in Embodiment 4 of the present disclosure, permanent magnet elements 2, instead of rotor coils, are arranged on the rotor body, and the shape of the plate materials is also slightly different. In Embodiment 4 of the present disclosure, the third plate materials and the fourth plate materials are both provided with third arc-shaped holes, and after the plurality of plate materials 1 are aligned and stacked together, the third arc-shaped holes are aligned to form the mounting chamber for mounting the permanent magnet elements 2.

The manufacturing method for manufacturing the outer rotor of Embodiment 4 provided by the embodiment of the present disclosure is different from Embodiment 1 in that the outer rotor of Embodiment 4 only needs to assemble a plurality of plate materials 1 and permanent magnet elements 2 together to form a rotor preform. During the specific assembly, the permanent magnet elements 2 may be fixed by tools, and the plate materials 1 are stacked on the permanent magnet elements 2 one by one, and then a plurality of third plate materials are mounted, and finally a plurality of third plate materials are mounted. Optionally, a plurality of third plate materials, a plurality of fourth plate materials, and a plurality of third plate materials may be stacked into a whole, and then the permanent magnet elements 2 may be inserted. There are many specific ways of assembly, which is not limited to the above.

An embodiment of the present disclosure provides a motor having a rotor as described in the above embodiments.

Finally, it should be noted that the above embodiments are only intended to illustrate but not to limit the technical solutions of the present disclosure. Although the present disclosure has been described in detail with reference to the aforementioned embodiments, it should be understood by those ordinarily skilled in the art that the technical solutions described in the aforementioned embodiments may still be modified, or some or all of their technical features may be substituted by equivalents. However, these modifications or substitutions do not make the essence of the corresponding technical solutions deviate from the scope of the technical solutions of various embodiments of the present disclosure.

## Claims

1. A manufacturing method for a rotor, **characterized by** comprising:
assembling a plurality of plate materials (1), and permanent magnet elements (2)/rotor coils together to form a rotor preform, wherein each plate material (1) is formed by plate-shaped fiber fabric pre-impregnated with resin, and shapes of the plurality of plate materials (1) satisfy that: the plurality of plate materials (1), after being aligned and stacked together, can be matched to form a rotor body having a mounting chamber, and the mounting chamber is suitable for mounting the permanent magnet elements (2) /rotor coils; and
forming a rotor after a sizing step and a curing step.

2. The manufacturing method according to claim 1, wherein the rotor is an inner rotor, and the step of assembling a plurality of plate materials (1), and permanent magnet elements (2) /rotor coils together to form a rotor preform comprises:
assembling the plurality of plate materials (1), a rotor shaft, the permanent magnet elements (2)/ rotor coils together to form the rotor preform, wherein
shapes of the plurality of plate materials (1) for manufacturing the inner rotor satisfy that: the plurality of plate materials (1), after being aligned and stacked together, can be matched to form the rotor body having a rotating shaft chamber and the mounting chamber, and the rotating shaft chamber is suitable for mounting the rotor shaft.

3. The manufacturing method according to claim 2, wherein the shapes of the plurality of plate materials are consistent, and each plate material comprises a first center hole (12) and a plurality of first arc-shaped holes (11) arranged around the first center hole (12); and after the plurality of plate materials (1) are aligned and stacked together, the first center hole (12) forms the rotating shaft chamber, and the first arc-shaped holes (11) form the mounting chamber for mounting the permanent magnet elements (2);
or
the shapes of the plurality of plate materials are inconsistent, and the plate materials (1) comprise a plurality of first plate materials stacked to constitute two end parts of the rotor body, and a plurality of second plate materials stacked to constitute a middle part of the rotor body, wherein both the first plate materials and the second plate materials have second center holes, and the second plate materials have second arc-shaped holes surrounding the second center holes; and after the plurality of plate materials (1) are aligned and stacked together, the second center holes are aligned to form the rotating shaft chamber, and the second arc-shaped holes are aligned to form the mounting chamber for mounting the rotor coils.

4. The manufacturing method according to claim 1, wherein the rotor is an outer rotor, and shapes of the plurality of plate materials (1) for manufacturing the outer rotor satisfy that: the plurality of plate materials (1), after being aligned and stacked together, can be matched to form the rotor body having a central chamber and the mounting chamber, wherein the central chamber comprises a stator chamber suitable for mounting a stator (8) and bearing chambers located at two ends of the stator chamber and suitable for mounting a bearing.

5. The manufacturing method according to claim 4, wherein the shapes of the plurality of plate materials (1) for manufacturing the outer rotor satisfy that:
the shapes of the plurality of plate materials are inconsistent, and the plate materials (1) comprise a plurality of third plate materials stacked to constitute two end parts of the rotor body, and a plurality of fourth plate materials stacked to constitute a middle part of the rotor body, wherein the third plate materials have third center holes, and after the plurality of third plate materials are assembled, the third center holes are aligned to form the bearing chambers; and the fourth plate materials have fourth center holes, after the plurality of fourth plate materials are stacked and assembled, the fourth center holes are aligned to form the stator chamber, and a diameter of each third center hole is larger than an outer diameter of the stator (8),
preferably, the third plate materials and the fourth plate materials are both provided with third arc-shaped holes, and after the plurality of plate materials (1) are aligned and stacked together, the third arc-shaped holes are aligned to form the mounting chamber for mounting the permanent magnet elements;
or
the fourth plate materials are provided with fourth arc-shaped holes, and after the plurality of fourth plate materials are aligned and stacked together, the fourth arc-shaped holes are aligned to form the mounting chamber for mounting the rotor coils.

6. The manufacturing method according to any one of claims 1 to 5, wherein before the sizing step, the manufacturing method further comprises winding the rotor preform with fiber filaments or tapes (9) impregnated with resin in a circumferential direction,
preferably, the sizing step comprises winding a surface of the rotor preform wrapped with the fiber filaments or tapes (9) impregnated with resin by using a sizing tape for pressurizing and sizing, or putting the rotor preform wrapped with the fiber filaments or tapes (9) impregnated with resin into a mold for pressurizing and sizing; and
preferably,
the curing step comprises putting the sized rotor preform into a curing furnace for heating and curing to obtain the rotor.

7. The manufacturing method according to any one of claims 1 to 5, wherein a thickness of the plate materials (1) is 0.05 mm to 0.5 mm;
and/or
a volume ratio of the fiber fabric is 67% to 70%, and a volume ratio of the resin is 30% to 33% in the plate materials (1);
and/or
the plate materials (1) is obtained by cutting a continuous fiber fabric pre-impregnated with resin;
and/or
the fiber fabric is a carbon fiber fabric, and the resin is a thermosetting resin.

8. A rotor, **characterized by** comprising:
a rotor body, provided with a mounting chamber, wherein the rotor body is integrally formed by stacking and curing a plurality of plate materials (1) along an axial direction of the rotor body, and the plate materials (1) are formed by plate-shaped fiber fabric pre-impregnated with resin; and
permanent magnet elements (2)/ rotor coils arranged in the mounting chamber.

9. The rotor according to claim 8, wherein the rotor is an inner rotor, and the rotor further comprises a rotor shaft, and the rotor body is further provided with a rotating shaft chamber suitable for mounting the rotor shaft.

10. The rotor according to claim 9, wherein shapes of the plurality of plate materials are consistent, and each plate material comprises a first center hole (12) and a plurality of first arc-shaped holes (11) arranged around the first center hole (12); and after the plurality of plate materials (1) are aligned and stacked together, the first center hole (12) forms the rotating shaft chamber, and the first arc-shaped holes (11) form the mounting chamber for mounting the permanent magnet elements (2);
or
the shapes of the plurality of plate materials are inconsistent, and the plate materials (1) comprise a plurality of first plate materials stacked to constitute two end parts of the rotor body, and a plurality of second plate materials stacked to constitute a middle part of the rotor body, wherein both the first plate materials and the second plate materials have second center holes, and the second plate materials have second arc-shaped holes surrounding the second center holes; and after the plurality of plate materials (1) are aligned and stacked together, the second center holes are aligned to form the rotating shaft chamber, and the second arc-shaped holes are aligned to form the mounting chamber for mounting the rotor coils.

11. The rotor according to claim 8, wherein the rotor is an outer rotor, and the plurality of plate materials (1), after being aligned and stacked together, can be matched to form the rotor body having a central chamber and the mounting chamber, wherein the central chamber comprises a stator chamber suitable for mounting a stator (8) and bearing chambers located at two ends of the stator chamber and suitable for mounting a bearing,
preferably, shapes of the plurality of plate materials are inconsistent, and the plate materials (1) comprise a plurality of third plate materials stacked to constitute two end parts of the rotor body, and a plurality of fourth plate materials stacked to constitute a middle part of the rotor body, wherein the third plate materials have third center holes, and after the plurality of third plate materials are assembled, the third center holes are aligned to form the bearing chambers; and the fourth plate materials have fourth center holes, after the plurality of fourth plate materials are stacked and assembled, the fourth center holes are aligned to form the stator chamber, and a diameter of each third center hole is larger than an outer diameter of the stator (8),
further preferably, the third plate materials and the fourth plate materials are both provided with third arc-shaped holes, and after the plurality of plate materials (1) are aligned and stacked together, the third arc-shaped holes are aligned to form the mounting chamber for mounting the permanent magnet elements;
or
the fourth plate materials are provided with fourth arc-shaped holes, and after the plurality of fourth plate materials are aligned and stacked together, the fourth arc-shaped holes are aligned to form the mounting chamber for mounting the rotor coils.

12. The rotor according to any one of claims 8 to 11, further comprising a reinforcing layer, wherein the reinforcing layer is formed by fiber filaments or tapes (9) pre-impregnated with resin wound and bundled along a circumferential direction of the rotor body and integrally cured with the rotor body,
preferably, further comprising a sizing tape layer arranged outside the reinforcing layer, wherein the sizing tape layer is configured for curing and sizing of the rotor.

13. The rotor according to any one of claims 8 to 11, wherein a thickness of the plate materials (1) is 0.05 mm to 0.5 mm;
and/or
a volume ratio of the fiber fabric is 67% to 70%, and a volume ratio of the resin is 30% to 33% in the plate materials (1);
the plate materials (1) is obtained by cutting a continuous fiber fabric pre-impregnated with resin;
and/or
the fiber fabric is a carbon fiber fabric, and the resin is a thermosetting resin.

14. The rotor according to claim 9 or 10, wherein the rotating shaft chamber for mounting the rotor shaft is a spline hole, and a spline matched with the spline hole is formed on an outer circumferential surface of the rotor shaft.

15. A motor, **characterized by** comprising the rotor according to any one of claims 8 to 13.
